# FASCICULE DE BREVET EUROPEEN

(11) **EP 0 849 855 B1**
(45) Date de publication et mention de la délivrance du brevet: **24.08.2005**
(21) Numéro de dépôt: 97403055.3
(22) Date de dépôt: 16.12.1997
(51) Int. Cl.: H02J 7/16, H02J 7/24

(54) **Procédé pour la gestion de l'excitation d'un alternateur de véhicule automobile par un régulateur**
Verfahren zum Management der Erregung eines Kraftfahrzeugdrehstromgenerators durch einen Regler
Method for managing automobile alternator excitation by means of a regulator

(30) Priorité: 16.12.1996 FR 9615419
(43) Date de publication de la demande: 24.06.1998
(73) Titulaire: VALEO EQUIPEMENTS ELECTRIQUES MOTEUR, 94000 Créteil (FR)
(72) Inventeur: Pierret, Jean-Marie, 75012 Paris (FR); Rechdan, Raymond, 94410 Saint Maurice (FR)
(74) Mandataire: Le Forestier, Eric

(56) Documents cités:
- EP-A- 0 330 561
- EP-A- 0 611 215
- US-A- 4 362 982

## Description

La présente invention est relative à un procédé pour la gestion de l'excitation d'un alternateur de véhicule automobile par un régulateur délivrant audit alternateur un signal d'excitation à impulsions à largeur modulée.

Le brevet européen EP6911726 décrit un système de charge destiné à un véhicule automobile et adapté au cas d'un régulateur recevant sous la forme d'un signal à impulsions à largeur modulée des instructions de commande que lui transmet un calculateur de contrôle moteur du véhicule.

Le signal émis par une unité de gestion du type d'un calculateur de contrôle moteur est cependant souvent d'une fréquence inférieure (de l'ordre de 5 à 10 Hz) à celle du signal d'excitation émis par le régulateur (de l'ordre de 50 Hz).

Il s'écoule donc un certain temps après le réveil du régulateur avant que celui-ci n'ait déterminé les informations de commande portées par le signal transmis par le calculateur.

Un but de l'invention est de permettre l'activation de l'alternateur dès le réveil du régulateur. Selon le procédé proposé par l'invention, le régulateur délivre, dans une phase d'amorçage, un signal de pré-excitation d'un rapport cyclique préprogrammé, cette phase d'amorçage étant d'une durée suffisante pour permettre audit régulateur de déterminer les informations de commande portées par le signal émis par l'unité de gestion, et, à l'issue de cette phase d'amorçage, ledit régulateur poursuit cette pré-excitation jusqu'à ce qu'il reçoive de l'unité de gestion l'ordre de réguler la tension de la batterie.

Avec une telle séquence de fonctionnement, le régulateur est en action dès qu'il est réveillé et avant même d'avoir déterminé les informations de commande portées par le signal émis par l'unité de gestion.

Ce procédé est avantageusement complété par les différentes caractéristiques suivantes prises seules ou selon toutes leurs combinaisons techniquement possibles :
- le rapport cyclique préprogrammé est de l'ordre de 12,5 % ;
- pendant la phase de poursuite de la pré-excitation, le régulateur mesure la tension de charge de la batterie et abaisse le rapport cyclique du signal d'excitation lorsque la tension mesurée devient supérieure à un seuil donné ;
- lorsque la tension mesurée devient supérieure audit seuil, le régulateur donne au signal d'excitation un rapport cyclique minimum de l'ordre de 4,5 % ;
- le rapport cyclique du signal émis par l'unité de gestion correspond, au-delà d'un seuil donné, à la valeur de tension sur laquelle le régulateur doit réguler la tension de charge de la batterie, le régulateur poursuivant la pré-excitation tant que le rapport cyclique est inférieur audit seuil ;
- la fréquence du signal émis par l'unité de gestion est variable et définit le taux de charge du régulateur lorsque ce régulateur comporte une fonction de charge progressive ;
- lorsque le signal émis par l'unité de gestion présente un rapport cyclique et/ou une fréquence en dehors d'une gamme donnée, le régulateur régule la tension de charge de la batterie sur une valeur pré-programmée ;
- le régulateur transmet en retour à l'unité de gestion des informations relatives notamment au signal d'excitation et/ou à la présence de défaut de fonctionnement ;
- le signal émis par le régulateur correspond à la superposition du signal d'excitation aux impulsions du signal transmis par l'unité de gestion ;
- le signal émis par le régulateur correspond au signal transmis par l'unité de gestion, dont les impulsions sont modulées en amplitude en fonction du rapport cyclique du signal d'excitation ;
- le signal émis par le régulateur est un signal à trois niveaux correspondant au mélange du signal transmis par l'unité de gestion et du signal d'excitation.

D'autres caractéristiques et avantages de l'invention ressortiront encore de la description qui suit. Cette description est purement illustrative et non limitative. Elle doit être lue en regard des dessins annexés sur lesquels :
- la figure 1 est une représentation schématique d'un dispositif de régulation d'alternateur comportant un régulateur commandé par une unité de gestion externe ;
- la figure 2 est un organigramme sur lequel on a porté les différentes étapes d'une séquence de commande conforme à un mode de mise en oeuvre possible ;
- les figures 3a, 3b et 3c illustrent différents types de signaux émis par le régulateur pour transmettre à l'unité de gestion externe des informations sur le signal d'excitation.

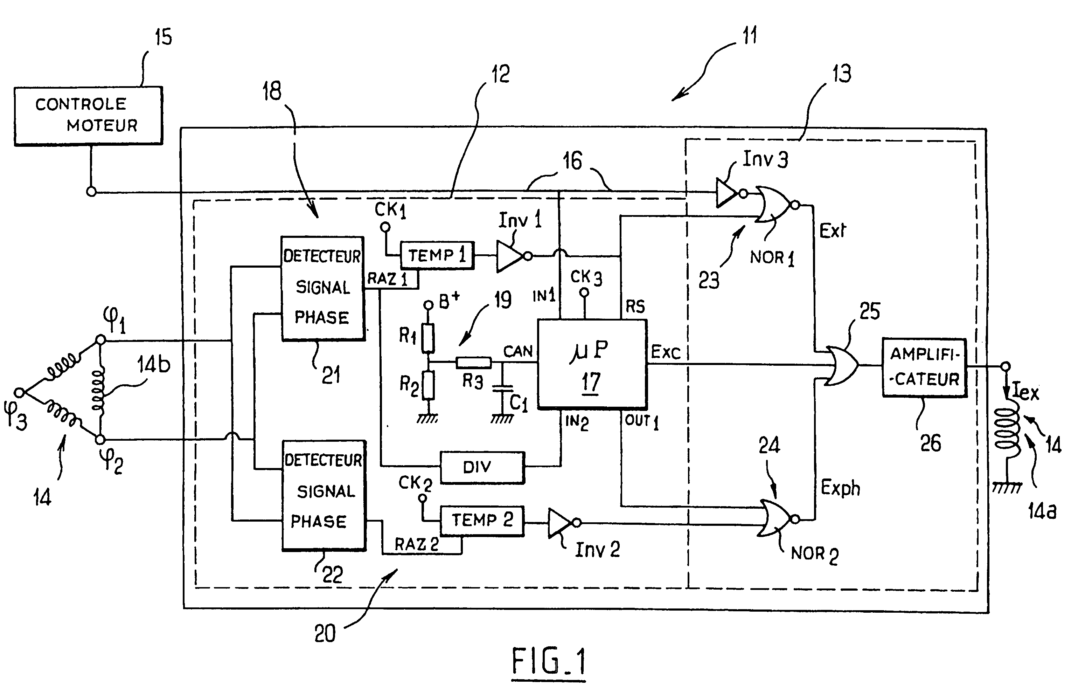

On a représenté sur la figure 1 une structure possible pour un dispositif de régulation qui comporte - outre un régulateur 11 proprement dit, qui délivre des signaux d'excitation à l'inducteur 14a d'un alternateur 14 - une unité de gestion 15 externe audit régulateur 11 et à l'alternateur 14, qui pilote ledit régulateur 11.

Le régulateur 11 y est constitué d'une part par un circuit de commande 12 recevant un signal phase, qui correspond à une tension entre deux phases de l'induit 14b de l'alternateur 14 (entrées ϕ₁ et ϕ₂), et d'autre part par un circuit de puissance 13, qui délivre un courant d'excitation à l'inducteur 14a de l'alternateur 14.

L'unité de gestion 15 est reliée à la fois au circuit de commande 12 et au circuit de puissance 13 (liaisons filaires 16).

Cette unité de gestion 15 est avantageusement le calculateur du contrôle moteur. Elle transmet aux circuits de commande et de puissance 12 et 13 un signal d'impulsions à largeur modulée (PWM ou Pulse Width Modulation selon la terminologie généralement utilisée).

Le circuit de puissance 13, qui est relié directement à l'unité de gestion 15, génère de lui-même à la réception du signal émis par l'unité de gestion 15 un signal d'excitation qui magnétise l'alternateur.

Le circuit de commande 12 est quant à lui réveillé par l'apparition du signal phase entre les entrées ϕ₁ et ϕ₂, c'est-à-dire lorsque l'alternateur 14 est en rotation - et donc capable de charger la batterie.

Plus particulièrement, le circuit de commande 12 comporte un calculateur constitué par un microcontrôleur 17, un circuit 18 de détection du signal phase dont la sortie est reliée à une entrée RS du microcontrôleur 17, un circuit de filtrage de tension 19 (pont diviseur R₁, R₂, R₃ et condensateur C₁) qui relie la tension de sortie de l'alternateur à une entrée CAN du microcontrôleur 17 via une borne B⁺ d'alimentation, ainsi qu'un circuit 20 de régulation du signal phase.

Le circuit 18 de détection du signal phase comporte un détecteur de signal 21, qui reçoit en entrée la tension entre les entrées ϕ₁ et ϕ₂. Il génère un signal de niveau haut lorsque cette tension est supérieure à 0,6 Volts. Le signal RAZ₁ en sortie de ce détecteur 21 est envoyé sur un dispositif de temporisation TEMP₁ qui est monté en série avec un inverseur logique Inv1, dont la sortie est elle-même injectée sur l'entrée RS du microcontrôleur 17.

Le circuit 20 de régulation du signal phase est également constitué par un détecteur de signal phase 22 relié à un dispositif de temporisation TEMP₂ en série avec un inverseur logique Inv2. Le détecteur de phase 22 génère un signal RAZ₂, qui est de niveau haut lorsque la tension entre les entrées ϕ₁ et ϕ₂ est supérieure à 7 volts.

Le circuit de puissance 13 comporte quant à lui un circuit 23 (inverseur logique Inv3 et porte NON-OU NOR₁) pour la validation du signal émis par l'unité de gestion 15, un circuit 24 (porte NON-OU NOR₂) de validation de la régulation phase, un collecteur 25 des différents signaux d'excitation (porte OU), ainsi qu'un amplificateur de puissance 26 qui fournit le courant d'excitation Iex à l'inducteur.

Lorsque l'alternateur ne tourne pas, le détecteur de phase 21 ne relance pas la temporisation TEMP₁ dont le niveau de sortie reste à 1. La sortie de l'inverseur Inv1 reste à zéro et le microcontrôleur 17 n'est pas activé. Ainsi, lorsque l'unité de gestion 15 délivre un signal PWM, le microcontrôleur 17 n'en tient pas compte. Par contre, ce signal PWM est reconstitué sur la sortie (Ext) de la porte NOR₁. En même temps, la sortie (Exc) du microcontrôleur 17 reste à zéro car ce dernier n'est pas activé. Pour la même raison, la sortie OUT₁ est au niveau 1, ce qui force le niveau zéro à la sortie (Exph) de la porte NOR₂. Le seul signal d'excitation disponible pour l'amplificateur 26 est donc le signal PWM reconstitué sur la sortie (Ext) de la porte NOR₁. Par conséquent, lorsque l'alternateur ne tourne pas, le signal d'excitation correspond au seul signal PWM.

Lorsque l'alternateur entre en rotation, le détecteur de phase 21 détecte la présence d'un signal phase sur les entrées ϕ₁ et ϕ₂, et remet à zéro la temporisation TEMP₁. La sortie de l'inverseur Inv1 passe à 1, ainsi que l'entrée RS du microcontrôleur 17 qui est alors réveillé.

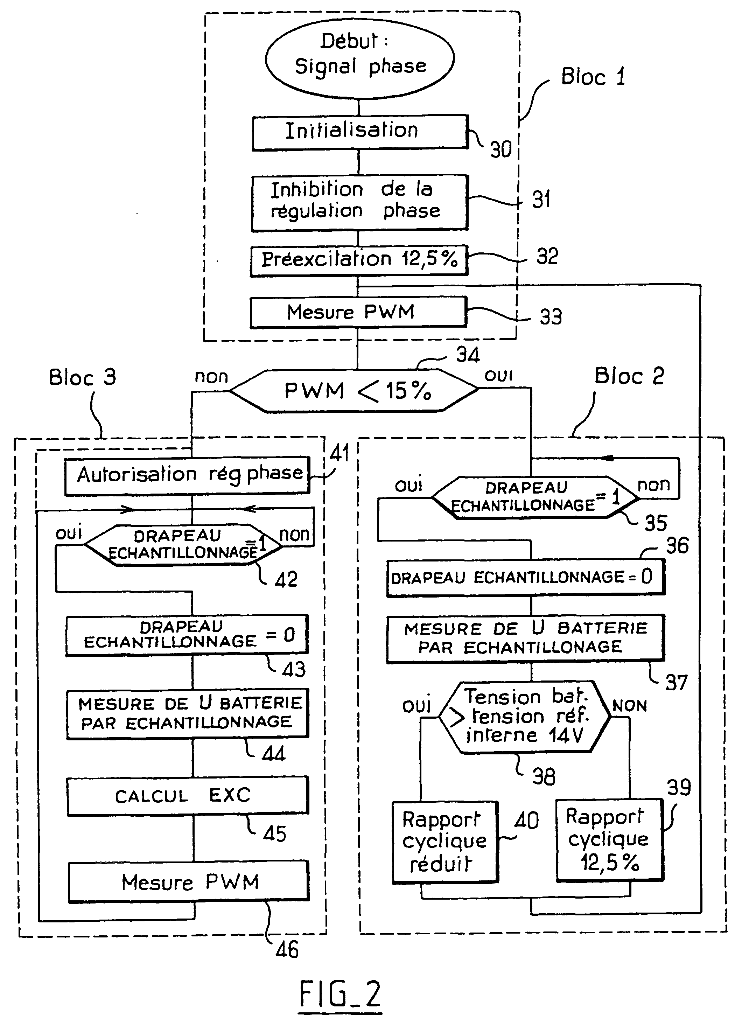

Le microcontrôleur 17 gère alors l'excitation de l'induit 14a selon la séquence de fonctionnement qui correspond à l'organigramme de la figure 2.

Cette séquence comprend trois parties :
- amorçage du régulateur (BLOC 1),
- maintien de la préexcitation (BLOC 2),
- régulation normale (BLOC 3).

### Amorçage du régulateur (BLOC 1)

Cette phase d'amorçage intervient dès que le signal phase a une amplitude supérieure à 0,6 Volts, c'est-à-dire que l'entrée (RS) du microcontrôleur 17 passe du niveau zéro au niveau 1, tandis que le signal Ext passe au niveau zéro.

Après initialisation des différentes variables (étape 30), la régulation du signal phase est inhibée (passage de la sortie OUT1 du niveau zéro au niveau 1) (étape 31).

Puis le microcontrôleur 17 fournit son propre signal de préexcitation sur la sortie Exc. Ce signal est par exemple avantageusement un signal d'une fréquence de 50 Hz, dont le rapport cyclique est égal à 12,5 % (étape 32).

Cette pré-excitation dure au moins un temps suffisant pour permettre au microcontrôleur 17 de calculer la valeur du rapport cyclique, ainsi que de la période du signal de pilotage PWM transmis par l'unité de gestion 15 via la liaison 16 (étape 33).

On notera que le signal de pilotage PWM est d'une fréquence de l'ordre de 5 Hz à 10 Hz, de sorte que la durée de ce temps de calcul est au moins de l'ordre de la seconde.

### Maintien de la préexcitation (BLOC 2)

Il est prévu que l'état de préexcitation peut être maintenu, sur ordre de l'unité de gestion 15, pour ne pas charger la batterie et réduire le couple de l'alternateur pendant l'accélération du moteur.

A cet effet, l'unité de gestion 15 émet un signal de pilotage PWM dont le rapport cyclique est inférieur à 15 %.

La valeur du rapport cyclique du signal PWM est comparée à ce seuil de 15 % (test 34) juste après l'étape 33 de détermination du rapport cyclique et de la période dudit signal.

Si le rapport cyclique du signal PWM est effectivement inférieur à ce seuil de 15 %, le microcontrôleur 17 met en oeuvre les différentes étapes du bloc 2.

Dans un premier temps, le micocontrôleur 17 attend qu'une mesure de la tension B⁺ soit réalisée par un échantillonnage sur son entrée CAN à laquelle est reliée le circuit de filtrage 19 : un drapeau d'échantillonnage passe à la valeur 1 lorsqu'une mesure peut être réalisée, puis redescend à zéro (étapes 35, 36, 37).

La valeur de la tension batterie B⁺ est alors comparée à une valeur de référence interne programmée, par exemple de l'ordre de 14 Volts (test 38) :
- si la valeur de la tension batterie B⁺ est inférieure à la valeur de la référence interne, le signal de préexcitation de rapport cyclique égal à 12,5 % est conservé (étape de décision 39),
- si la valeur de la tension batterie B⁺ est égale ou supérieure à la valeur de la référence interne, le rapport cyclique du signal de préexcitation est réduit à une valeur minimale, par exemple de l'ordre de 4,5 %, afin de ne pas mettre la batterie en surcharge (étape de décision 40).

Puis, le microcontrôleur 17 reprend le traitement à l'étape 33 en mesurant à nouveau le rapport cyclique du signal PWM pour le comparer avec le seuil de 15 %.

### Régulation normale (BLOC 3)

Sur ordre de l'unité de gestion 15, il est prévu de quitter l'état de pré-excitation pour effectuer une régulation normale de la tension batterie.

Cet ordre est donné lorsque l'unité de gestion 15 a reconnu que le moteur n'était plus en phase de démarrage et qu'il peut supporter le couple de l'alternateur 14 lorsque ce dernier charge la batterie.

Dans ce cas, l'unité de gestion 15 émet un signal PWM dont le rapport cyclique est :
- supérieur ou égal au seuil de 15 %,
- représentatif de la tension de régulation prévue par l'unité de gestion 15.

La réponse au test 34 étant "non", le microcontrôleur 17 met en oeuvre les étapes du bloc 3.

Il autorise d'abord à nouveau la régulation du signal phase à 7 Volts, sa sortie (OUT 1) passant du niveau 1 au niveau 0 (étape 41).

Ainsi, si la tension entre ϕ₁ et ϕ₂ tombe en dessous de 7 Volts, le détecteur de phase 22 ne remet pas à zéro la temporisation TEMP₂ dont la sortie passe au niveau 1, ce qui met à zéro la sortie de l'inverseur Inv2. La sortie OUT1 étant aussi à zéro, la sortie de la porte NOR₁ délivre un signal d'excitation Exph au niveau 1, qui augmente le courant d'excitation Iex via la porte OR 25 et l'amplificateur 26.

Après cette remise à zéro de la sortie OUT1, le microcontrôleur 17 attend qu'une mesure de la tension B⁺ soit réalisée par un échantillonnage sur son entrée CAN à laquelle est relié le circuit de lissage 19 : un drapeau d'échantillonnage passe à la valeur 1 lorsqu'une mesure peut être réalisée, puis redescend à zéro (étapes 42, 43, 44).

Puis dans une étape 45, le microcontrôleur calcule la durée des impulsions du signal d'excitation Exc en fonction de la référence tension prévue par l'unité de gestion 15 (rapport cyclique du signal de pilotage PWM) et en fonction de la valeur réelle de la tension batterie mesurée lors de l'échantillonnage.

Dans une étape 46, le rapport cyclique du signal PWM est à nouveau déterminé et le traitement est repris à l'étape 42 ou, de préférence à l'étape 41, pour déterminer une nouvelle mesure de la tension B⁺.

Bien entendu, en variante, l'étape 46 pourrait ne pas exister, le traitement étant repris à l'étape 33 directement après la fin du calcul de l'étape 45, ce qui permet de revenir à tout moment en état de préexcitation sur ordre de l'unité de gestion 15.

Le déroulement du traitement est arrêté uniquement lors de la disparition du signal phase (entrée RS au niveau 0), ce qui correspond à l'arrêt du moteur.

Lorsque le signal PWM disparaît ou ne correspond pas à certaines caractéristiques (en fréquence et/ou en rapport cyclique), le calcul de la durée du signal d'excitation est établi à partir d'une référence interne au régulateur. Par exemple, on ne tient pas compte du signal PWM si sa fréquence n'est pas comprise entre 3 et 15 Hz et si son rapport cyclique n'est pas compris entre 5 % et 95 %. Dans ce cas, on utilise une référence correspondant à 14 Volts, interne au régulateur.

Des paramètres autres que la référence tension peuvent être introduits pour définir la période du signal d'excitation. En particulier, la durée des impulsions de ce signal peut varier progressivement. Cette progressivité peut être définie :
- par des paramètres internes au régulateur,
- en fonction de la fréquence des signaux phases,
- par l'unité de gestion 15 via le signal de pilotage PWM. Par exemple, la durée des impulsions du signal PWM peut varier entre 5 et 10 Hz, sa valeur définissant le taux de charge progressive, c'est-à-dire la pente d'une droite de charge permettant de faire passer progressivement d'une charge nulle au plein champ dans un temps compris entre 0 et 10 secondes.

Pour un exemple de commande avec une fonction charge progressive, on pourra avantageusement se référer au brevet FR 2 701 609.

Le microcontrôleur 17 peut également comporter des circuits de temporisation du type de ceux décrits notamment dans les brevets FR 2747859 et FR 2747860, dont les enseignements sont ici inclus par référence, pour gérer les interruptions externes par les signaux phases et le signal de pilotage, ainsi que les interruptions de signal d'horloge déclenchant les fronts de montée et de descente du signal d'excitation et les échantillonnages de mesure de la tension batterie B⁺.

Par ailleurs, on prévoit avantageusement que la liaison 16 entre le régulateur 11 et l'unité de gestion 15 est bi-directionnelle et que le régulateur 11 transmet à l'unité de gestion 15 des informations notamment sur le rapport cyclique du signal d'excitation émis par le microcontrôleur 17, ainsi que sur l'apparition d'éventuels défauts de fonctionnement.

A cet effet, il peut être prévu que le régulateur 11 émet en direction de l'unité de gestion un signal qui correspond à la superposition du signal d'excitation et des impulsions du signal transmis par l'unité de gestion 15.

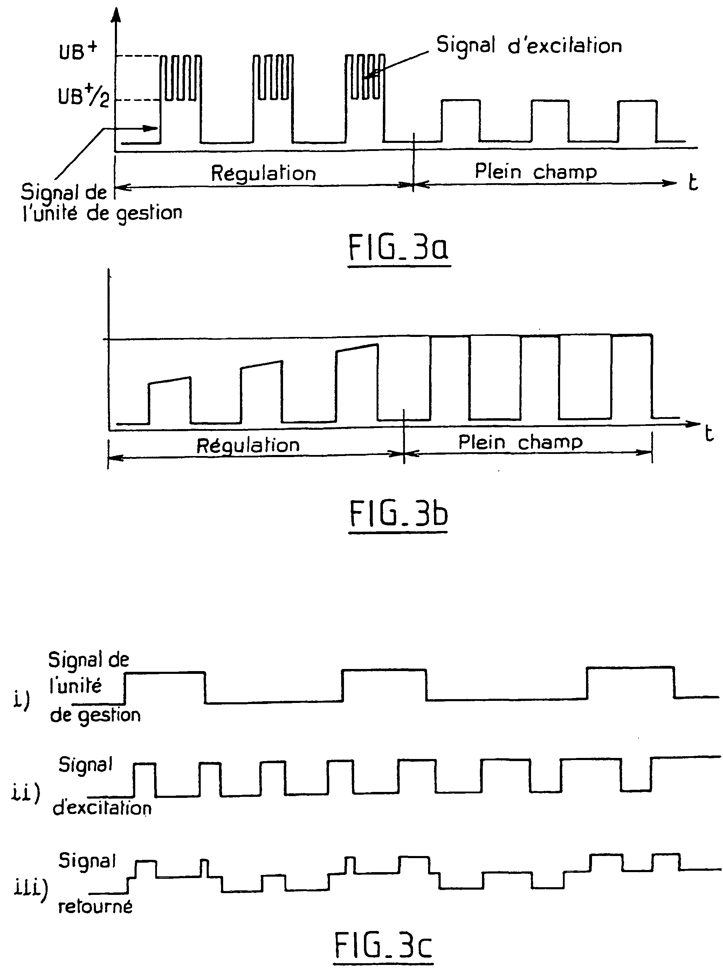

Un signal en ce sens a été illustré sur la figure 3a. Le signal d'excitation y est superposé au signal de l'unité de gestion 15 au dessus d'une amplitude égale à la moitié de la tension UB⁺ de la batterie.

Pour signaler l'apparition d'un défaut de fonctionnement, le régulateur 11 force à la masse le potentiel de la liaison entre ledit régulateur 11 et l'unité de gestion 15. Ladite unité de gestion 15 interprète cette mise à la masse comme un défaut de fonctionnement du régulateur 11 ou comme une coupure de la liaison 16.

En variante, ainsi qu'illustré sur la figure 3b, le signal transmis par le régulateur 11 peut être un signal qui correspond au signal PWM émis par l'unité de gestion 15 modulé en amplitude en fonction du rapport cyclique du signal d'excitation. Cette amplitude est alors une représentation analogique du taux d'excitation et est exploitable par un convertisseur analogique-numérique intégré à l'unité de gestion 15.

En variante encore, ainsi qu'illustré sur la figure 3c, le signal retourné iii à l'unité de gestion 15 peut être un signal sur trois niveaux, correspondant au mélange du signal d'excitation ii et du signal i transmis par ladite unité de gestion 15.

## Revendications

1. Procédé pour la gestion de l'excitation d'un alternateur de véhicule automobile par son régulateur (11), ledit régulateur (11) recevant d'une unité de gestion externe (15) un signal de commande d'excitation à impulsions à largeur modulée et délivrant à l'inducteur de l'alternateur (14) un signal d'excitation à impulsions à largeur modulée, **caractérisé en ce que**, le signal de commande d'excitation étant d'une fréquence inférieure à celle du signal d'excitation, ledit régulateur (11) délivre, dans une phase d'amorçage, un signal de pré-excitation d'un rapport cyclique préprogrammé, cette phase d'amorçage étant d'une durée suffisante pour permettre audit régulateur de déterminer les informations de commande portées par le signal émis par l'unité de gestion (15) et **en ce que**, à l'issue de cette phase d'amorçage, ledit régulateur (11) poursuit cette pré-excitation jusqu'à ce qu'il reçoive de l'unité de gestion l'ordre de réguler la tension de la batterie.

2. Procédé selon la revendication 1, **caractérisé en ce que** le rapport cyclique préprogrammé est de l'ordre de 12,5 %.

3. Procédé selon l'une des revendications 1 ou 2, **caractérisé en ce que** pendant la phase de poursuite de la pré-excitation, le régulateur (11) mesure la tension de charge de la batterie et abaisse le rapport cyclique du signal d'excitation lorsque la tension mesurée devient supérieure à un seuil donné.

4. Procédé selon la revendication 3, **caractérisé en ce que** lorsque la tension mesurée devient supérieure audit seuil, le régulateur (11) donne au signal d'excitation un rapport cyclique minimum de l'ordre de 4,5 %.

5. Procédé selon l'une des revendications précédentes, **caractérisé en ce que** le le rapport cyclique du signal émis par l'unité de gestion (15) correspond, au-delà d'un seuil donné, à la valeur de tension sur laquelle le régulateur doit réguler la tension de charge de la batterie, le régulateur (11) poursuivant la pré-excitation tant que le rapport cyclique est inférieur audit seuil.

6. Procédé selon la revendication 5, **caractérisé en ce que** la fréquence du signal émis par l'unité de gestion est variable et définit le taux de charge du régulateur (11) lorsque ce régulateur comporte une fonction de charge progressive.

7. Procédé selon l'une des revendications 5 ou 6, **caractérisé en ce que** lorsque le signal émis par l'unité de gestion présente un rapport cyclique et/ou une fréquence en dehors d'une gamme donnée, le régulateur (11) régule la tension de charge de la batterie sur une valeur pré-programmée.

8. Procédé selon l'une des revendications précédentes, **caractérisé en ce que** le régulateur (11) transmet en retour à l'unité de gestion (15) des informations relatives notamment au signal d'excitation et/ou à l'apparition de défaut de fonctionnement.

9. Procédé selon la revendication 8, **caractérisé en ce que** le signal émis par le régulateur (11) correspond à la superposition du signal d'excitation aux impulsions du signal transmis par l'unité de gestion (15).

10. Procédé selon la revendication 8, **caractérisé en ce que** le signal émis par le régulateur (11) correspond au signal transmis par l'unité de gestion (15), dont les impulsions sont modulées en amplitude en fonction du rapport cyclique du signal d'excitation.

11. Procédé selon la revendication 8, **caractérisé en ce que** le signal émis par le régulateur est un signal à trois niveaux de tensions correspondant au mélange du signal transmis par l'unité de gestion et du signal d'excitation.

## Patentansprüche

1. Verfahren zum Management der Erregung eines Kraftfahrzeug-Drehstromgenerators durch seinen Regler (11), wobei der besagte Regler (11) von einer externen Managementeinheit (15) ein pulsweitenmoduliertes Erregungssteuerungssignal erhält und an die Erregerwicklung des Drehstromgenerators (14) ein pulsweitenmoduliertes Erregungssteuerungssignal liefert, **dadurch gekennzeichnet, dass**, insoweit das Erregungssteuerungssignal eine Frequenz aufweist, die niedriger als diejenige des Erregungssignals ist, der besagte Regler in einer Ansteuerphase ein Vorregungssignal mit einem vorprogrammierten Tastverhältnis liefert, wobei diese Ansteuerphase eine ausreichende Dauer hat, um es dem besagten Regler zu ermöglichen, die Steuerungsinformationen zu bestimmen, die von dem durch die Managementeinheit (15) ausgegebenen Signal übermittelt werden, und dass nach Abschluss dieser Ansteuerphase der besagte Regler (11) diese Vorerregung fortsetzt, bis er von der Managementeinheit den Befehl erhält, die Spannung der Batterie zu regeln.

2. Verfahren nach Anspruch 1, **dadurch gekennzeichnet, dass** das vorprogrammierte Tastverhältnis in einer Größenordnung von 12,5 % liegt.

3. Verfahren nach einem der Ansprüche 1 oder 2, **dadurch gekennzeichnet, dass** während der Phase zur Fortsetzung der Vorerregung der Regler (11) die Ladespannung der Batterie misst und das Tastverhältnis des Erregungssignals absenkt, wenn die gemessene Spannung größer als ein gegebener Schwellenwert wird.

4. Verfahren nach Anspruch 3, **dadurch gekennzeichnet, dass**, wenn die gemessene Spannung größer als der besagte Schwellenwert wird, der Regler (11) dem Erregungssignal ein minimales Tastverhältnis in der Größenordnung von 4,5 % gibt.

5. Verfahren nach einem der vorangehenden Ansprüche, **dadurch gekennzeichnet, dass** das Tastverhältnis des durch die Managementeinheit (15) ausgegebenen Signals nach Überschreiten eines gegebenen Schwellenwerts dem Spannungswert entspricht, auf den der Regler die Ladespannung der Batterie regeln soll, wobei der Regler (11) die Vorerregung fortsetzt, solange das Tastverhältnis kleiner als der besagte Schwellenwert ist.

6. Verfahren nach Anspruch 5, **dadurch gekennzeichnet, dass** die Frequenz des durch die Managementeinheit ausgegebenen Signals veränderlich ist und den Ladegrad des Reglers (11) definiert, wenn dieser Regler eine progressive Ladefunktion umfasst.

7. Verfahren nach einem der Ansprüche 5 oder 6, **dadurch gekennzeichnet, dass**, wenn das durch die Managementeinheit ausgegebene Signal ein Tastverhältnis und/oder eine Frequenz außerhalb eines gegebenen Bereichs aufweist, wobei der Regler (11) die Ladespannung der Batterie auf einen vorprogrammierten Wert regelt.

8. Verfahren nach einem der vorangehenden Ansprüche, **dadurch gekennzeichnet, dass** der Regler (11) an die Managementeinheit (15) Informationen zurück überträgt, die insbesondere mit dem Erregungssignal und/oder mit dem Auftreten einer Fehlfunktion zusammenhängen.

9. Verfahren nach Anspruch 8, **dadurch gekennzeichnet, dass** das durch den Regler (11) ausgegebene Signal der Überlagerung des Erregungssignals über die Impulse des durch die Managementeinheit (15) übertragenen Signals entspricht.

10. Verfahren nach Anspruch 8, **dadurch gekennzeichnet, dass** das durch den Regler (11) ausgegebene Signal dem durch die Managementeinheit (15) übertragenen Signal entspricht, dessen Impulse in Abhängigkeit vom Tastverhältnis des Erregungssignals amplitudenmoduliert werden.

11. Verfahren nach Anspruch 8, **dadurch gekennzeichnet, dass** das durch den Regler ausgegebene Signal ein Signal mit drei Spannungsstufen entsprechend der Mischung des durch die Managementeinheit übertragenen Signals und des Erregungssignals ist.

## Claims

1. Method for managing the excitation of an automobile alternator by means of its regulator (11), the said regulator (11) receiving a pulse width modulation excitation control signal from an external management unit (15) and delivering a pulse width modulation excitation signal to the inductor of the alternator (14), the excitation control signal having a frequency less than that of the excitation signal, the said regulator (11) delivers, in an initiation phase, a pre-excitation signal with a pre-programmed duty cycle ratio, this initiation phase being of sufficient duration to enable the said regulator to determine the control information carried by the signal emitted by the management unit (15), and in that, at the end of this initiation phase, the said regulator (11) continues this pre-excitation until it receives, from the management unit, the instruction to regulate the battery voltage.

2. Method according to claim 1, **characterised in that** the pre-programmed duty cycle ratio is around 12.5%.

3. Method according to one of claims 1 or 2, **characterised in that**, during the phase of continuing the pre-excitation, the regulator (11) measures the battery charging voltage and reduces the duty cycle ratio of the excitation signal when the measured voltage becomes greater than a given threshold.

4. Method according to claim 3, **characterised in that**, when the measured voltage becomes greater than the said threshold, the regulator (11) gives to the excitation signal a minimum duty cycle ratio of around 4.5%.

5. Method according to one of the preceding claims, **characterised in that** the duty cycle ratio of the signal emitted by the management unit (15) corresponds, beyond a given threshold, to the voltage value on which the regulator must regulate the charging voltage of the battery, the regulator (11) continuing the pre-excitation as long as the duty cycle ratio is below the said threshold.

6. Method according to claim 5, characterise in that the frequency of the signal emitted by the management unit is variable and defines the degree of charging of the regulator (11) when this regulator comprises a progressive charging function.

7. Method according to one of claims 5 or 6, **characterised in that**, when the signal emitted by the management unit has a duty cycle ratio and/or a frequency outside a given range, the regulator (11) regulates the battery charging voltage on a pre-programmed value.

8. Method according to one of the preceding claims, **characterised in that** the regulator (11) transmits in return to the management unit (15) information relating in particular to the excitation signal and/or the appearance of an operating fault.

9. Method according to claim 8, **characterised in that** the signal emitted by the regulator (11) corresponds to the superimposition of the excitation signal on the pulses of the signal transmitted by the management unit (15).

10. Method according to claim 8, **characterised in that** the signal emitted by the regulator (11) corresponds to the signal transmitted by the management unit (15), the pulses of which are amplitude modulated according to the duty cycle ratio of the excitation signal.

11. Method according to claim 8, **characterised in that** the signal emitted by the regulator is a signal with three voltage levels corresponding to the mixing of the signal transmitted by the management unit and the excitation signal.
